# EUROPÄISCHE PATENTSCHRIFT

(11) **EP 1 336 343 B1**
(45) Veröffentlichungstag und Bekanntmachung des Hinweises auf die Patenterteilung: **13.09.2006**
(21) Anmeldenummer: 03001750.3
(22) Anmeldetag: 28.01.2003
(51) Int. Cl.: A23N 12/00, B08B 5/02, A23N 15/00

(54) **Kopfkohl-Putzstrecke und Anlage zum Aufbereiten von Lagerkohl**
System for cleaning a headed cabbage and device for preparing a storage cabbage
Système pour nettoyer des choux pommés et dispositif pour la préparation des choux d'hiver

(30) Priorität: 14.02.2002 DE 10205992
(43) Veröffentlichungstag der Anmeldung: 20.08.2003
(73) Patentinhaber: Basten, Norbert, 50181 Bedburg (DE)
(72) Erfinder: Basten, Norbert, 50181 Bedburg (DE)
(74) Vertreter: Schmetz, Bruno

(56) Entgegenhaltungen:
- EP-A- 0 887 025
- DE-A- 3 921 910
- GB-A- 2 233 880
- SU-A- 1 598 957

## Beschreibung

Die vorliegende Erfindung bezieht sich auf eine Vorrichtung zur Vermarktungsaufbereitung von am Strunkende auf Abgabemaß zugeschnittenem Kohl, insb. Lagerkohl, in einer Putzstrecke mit im wesentlichen horizontalen, zur Umwälzung des Kohls geeigneten Putzund Förderwalzen, über denen eine Folge von luftbeaufschlagten Anblasrohren oder Düsen im wesentlichen zum Kohl hin zur Einstellung der Luft-Auslassrichtung dreh- bzw. schwenkbar angeordnet sind - sowie auf eine Lagerkohl-Aufbereitungsanlage mit einer solchen Putzvorrichtung.

Kohl wird in großen Mengen (Kopfkohl-Anbaufläche von ca.14500 ha in Deutschland) angebaut und zum Teil bereits bei der automatischen Ernte in einer Putzstrecke von Hüllblättern befreit. Große Anteile müssen jedoch über die Zeit bis zur nächsten Ernte eingelagert und nach und nach als sog. Lagerkohl auf Marktqualität geputzt werden.

Dafür zeigt die DE-OS 23 52 690 aus 1975 eine Vorrichtung zum Entfernen der Hüllblätter von maschinell geernteten Kohlköpfen in einer Putzstrecke mit einer Förderschnecke zwischen zwei etwas höheren Stützswalzen, in deren Zwischenraum ein Luftstrom von unten geblasen wird. Die besondere Empfindlichkeit des Kohls wird durch spezielle Transportmittel zur Überwindung von Höhenunterschieden innerhalb der Anlage berücksichtigt.

Gemäß der DE-OS 29 52 890 werden längliche Arbeitsstangen in Schüttelbewegung versetzt, um loses Blattwerk vom Erntekohl zu entfernen. Die DE-OS 23 43 877 beschreibt eine Erntemaschine mit Entblätterungsschnecke, von der ein schonender Transport des Kohls auf ein höher gelegenes Sortierband mittels eines sog. Ringelevators erfolgen soll.

In der G 93 00 376.5 wird die Putzvorrichtung einer Kohlerntemaschine beschrieben, bei der mehrere parallel zueinander angeordnete Förderwellen oder -schnecken mit gleichsinnig wendelförmigen Erhebungen mit unterschiedlich eingestellter Drehgeschwindigkeit angetrieben werden, wobei durch leicht ansteigende oder abfallende Anordnung der Schnecken die Verweildauer des Kohls in der Putzstrecke eingestellt werden kann. Die Entblätterung des Kohls soll durch seine Rollbewegung in der Putzstrecke herbeigeführt werden, die ggf. vier trogartig angeordnete Schnecken aufweisen kann.

Die DE 39 21 910 C2 aus 1993 greift die zusätzliche Anblaswirkung wieder auf und beschreibt eine relativ komplizierte Putzvorrichtung, bei der zugeschnittete Kohlköpfe auf einzelnen Schablonen gehalten und unter Bewegung des Kohls sowie Anblasen desselben mittels unterschiedlich gerichteter Druckluftstrahlen von ≤ 12 kp geputzt werden.

Aus der GB-22 33 880 ist eine Kohlkopfputzstrecke bekannt, in der eine Reile von Luftdüsen mit über Ventile verstellbaren Luftstrom vorgesehen ist.

Die DE 42 40 805 A1 aus 1994 beschreibt wiederum eine ohne Druckluft arbeitende Putzstrecke, bei der der Kohl mit zwei entgegen der Transportrichtung arbeitenden Putzwalzen und einer dazwischen in Transportrichtung laufenden Förderschnecke Umwälzkräften ausgesetzt und gleichzeitig von einem umlaufenden elastischen Netzband angedrückt und auf diese Weise entblättert wird.

Aus der EP 0887 025 A2 aus 1998 ist schließlich eine Anordnung zum Entblättern bzw. Putzen von Gemüse, insb. Kohl, bekannt, bei der zwei gleichsinnig mit gleicher oder unterschiedlicher Geschwindigkeit rotierende Putzwalzen mit - ggf. jeweils unterschiedlichem - helikalem Vorsprung bzw. Wulstprofil und einem Abstand, der kleiner als der Kohldurchmesser ist, für eine Umwälz- bzw. Torkelbewegung des Kohls sorgen, der mittels federnd angeordneter Deflektoren am "Auswandern" von den Walzen gehindert und von oben mit einer Mehrzahl von Düsen angeblasen wird, die parallel angeordnet ohne erkennbare einzelne oder gemeinsame Beaufschlagung mit Luft bzw. Strömungsmedium gezeigt werden. Diese Düsen können einzeln oder gemeinsam schwenkbar montiert sein, so daß der Einstrahlwinkel der Luft auf den Kohl für jede Düse einzeln oder für alle gemeinsam variiert werden kann. Durch diese Veränderung des Anblaswinkels soll die Wirkung der Luftstrahlen ohne Justierung des Luftdrucks an den Blasrohren bzw. Düsen variiert werden, ohne dass jedoch Ziel oder Zweck genannt werden. - Speziell gezeigt wird eine Putzstrecke mit zwei helikal rohr-umwickelten Walzen, von denen eine durch einen Kranz von Stäben mit Zwischenräumen und mit leicht erhöhtem Vertikal-Abstand zur Nachbarwalze hin gebildet wird.

Diese für die Bearbeitung von Gemüse allgemein, insb. aber Kohl, beschriebene Putzvorrichtung dürfte durchaus mit gewissem Erfolg arbeiten. Es wurde jedoch festgestellt, daß die Effektivität der Putzstrecke - insb. bei der Bearbeitung von Lagerkohl für die Vermarktung - noch verbessert werden kann, wenn eine von einem gemeinsamen Gebläse betriebene Anblasstrecke mit einer Folge von dreh- bzw. schwenkbaren Anblasrohren verwendet wird, deren jeweiliger Auslassquerschnitt individuell eingestellt werden kann, so dass eine optimale Zuströmverteilung über die Putzstrecke hinweg unabhängig vom Anströmwinkel erreicht werden kann, die dem Anströmbedarf für die jeweilige Kohlbeschaffenheit - einschließlich von Änderungen derselben im Verlaufe der Putzoperation - gerecht wird.

Die der Erfindung zugrundeliegende Aufgabe ist mithin eine entsprechende Verbesserung der eingangs genannten Vorrichtung. Ihre Lösung wird im wesentlichen erreicht durch eine der Kohlbeschaffenheit über die Putzstrecke hinweg anpassbare Anströmeffektivität durch individuell einstellbare Auslassquerschnitte der (dreh- bzw. schwenkbaren) Anblasrohre, die mit entsprechend veränderbaren Auslassblenden versehen sind und - durch ein gemeinsames Gebläse gespeist - von dessen Haupt- bzw. Verteilerleitung abzweigen.

Vorzugsweise ist dabei - je nach Beschaffenheit bzw. Zustand des Kohls - der von seiner Blende freigegebene Ausströmquerschnitt des zumindest ersten Anblasrohres am (bzw. über dem) Putzstreckeneingang am größten wählbar, wo die vom Kohl abzutrennende Abfallmenge im allgemeinen am größten ist.

Zusätzlich kann die Putzwirkung noch dadurch optimiert werden, dass nicht nur eine einfache Schwenkbewegung der Anblasrohre zur Veränderung der Anströmwinkel vorgesehen wird, sondern auch Ort und Richtung der Auslassblenden über der Putzstreckenfläche beliebig (z.B. alternierend von der Putzstreckensymmetrie abweichend etc.) durch entsprechende Dreh- und Umlenkelemente in der zur Auslassblende führenden Rohrstrecke der Anblasrohre einstellbar sind, insbesondere unter Einbezug von Richtungsänderungen im Rohrverlauf (mit dadurch zusätzlich verursachter Veränderung des Strömungsverhaltens) - etwa unter Verwendung von Krümmern, Winkel- oder Kniestücken, Dreh- bzw. Gelenkverbindungen, abgesteiften Faltenbalgen etc. mit entsprechend abwandelbarer Gestalt des jeweiligen Anblasrohrverlaufs bzw. der einzelnen Anblasrohre.

Damit wird auf sehr einfache Weise eine beliebige Strahlrichtung, von einem beliebigen Punkt über der Putzfläche ausgehend einstellbar, und zwar unabhängig von der Anströmeffektivität über die Putzstrecke hinweg, die im wesentlichen durch die jeweilige Größen-Einstellung der einzelnen Auslassquerschnitte an den Blenden der von einer gemeinsamen Hauptgebläseleitung (Blindleitung) abzweigenden Anblasrohre bestimmt wird. Die freie Einflussnahme auf die einzelnen zusammenwirkenden Parameter des Putzprozesses bietet erhebliche Vorteile gegenüber der bislang bekannten Kopfkohl- insb. Lagerkohlputztechnik.

Das erfindungsgemäße Anströmkonzept für Strömungsmedien, insbesondere Luft, ist ganz allgemein zusammen mit Putzund Förderwalzenanordnungen realisierbar, wie sie in vielfältiger Art für Kopfkohl-Reinigungsstrecken - z.B. in den einleitend genannten Patentanmeldungen - vorgeschlagen werden.

Anwendbar sind allgemein zwei bis vier etwa horizontale ggf. mit Stützwalzen kombinierte (ggf. trogartig angeordnete) parallele Putz- bzw. Förderwalzen bzw. schnecken mit helikalem Wulstprofil unterschiedlicher Ganghöhe, die eine langsame Fortbewegung des Kohls unter allseitiger Umwälzung herbeiführen, wobei Leitelemente dafür sorgen, daß der Kohl nicht seitlich aus dem Putzbereich entweichen kann. Der Abstand der Walzen untereinander und zu den Leitelementen ist kleiner als der Kohldurchmesser, was durch entsprechende Einstellmöglichkeiten erreicht werden kann.

Die erfindungsgemäße Putzstrecke bzw. -vorrichtung bewährt sich insbesondere einbezogen in eine halbautomatische Anlage, die das gesamte Putzprogramm unter Realbedingungen bewältigt - mit Ein- und Ausgang von zu putzendem bzw. geputzem Kohl - vorzugsweise einschließlich der Abfallsammlung.

Nachfolgend wird die erfindungsgemäße Putzvorrichtung mehr im Einzelnen beschrieben sowie ein mit relativ einfachen Mitteln realisiertes Ausführungsbeispiel für eine Lagerkohl-Putzanlage, die über längere Zeit mit großem Erfolg und Personaleinsparung getestet worden ist. Diese Beschreibung nimmt Bezug auf die angefügten Zeichnungen. Es zeigen schematisch:
Fig.1, 1a eine erfindungsgemäße Putzstrecke, teilweise im Vertikalschnitt;
Fig.2 u. 3 bevorzugte Anblasstrecken mit angedeutetem Ausführungsdetail;
Fig.4 Detail des Putzstreckenendes;
Fig.5 deutet Abstandsregulierung und Putzwalzen-Umhüllung an und
Fig.6 zeigt einen Überblick über eine Lagerkohl-Putzanlage mit der beschriebenen Putzstrecke (betrachtet von außerhalb der Putzhalle, d.h.von einem gegenüber Fig.1 um 180° veränderten Standpunkt des Betrachters).

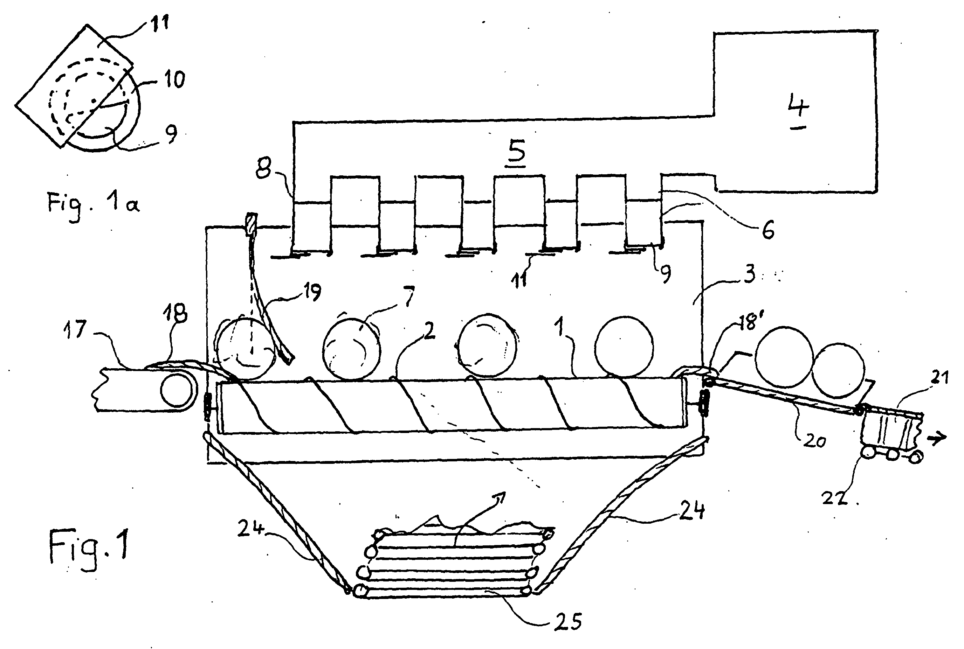

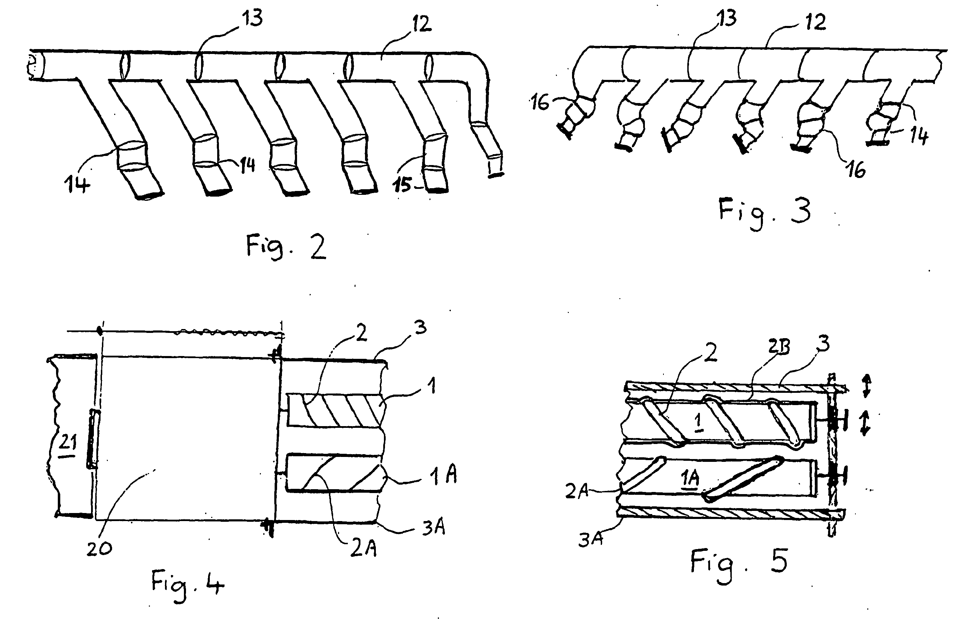

Die in Fig.1 skizzierte Putzstrecke zeigt die (in Blickrichtung) hintere (in dargestellter Putzrichtung linke) Putzwalze 1 mit helikaler Umwicklung 2 vor der Begrenzungswand 3 des Putzbreichs und die vom Gebläse 4 mittels Hauptrohr 5 gespeiste Anblasstrecke , die etwa symmetrisch über dem Zwischenraum zwischen den Walzen 1, 1A und Begrenzungswänden 3, 3A (siehe Fig.4 u.5) angeordnet ist. Ihre Anblasrohre 6 greifen in den Raum zwischen den Begrenzungswänden 3, 3A ein und enden in angemessener Höhe über dem Kohl 7. In der Rohrstrecke der Anblasrohre ist durch 8 eine Dreh- bzw. Schwenkbarkeit angedeutet, die etwa durch eine Dreh- bzw. Schwenkverbindung von Rohrstutzen erreicht werden kann und dem bekannten Vorschlag (s.o.) folgend eine wählbare Winkeleinstellung des Austrittsstrahls bzw. des Kohl-Anblaswinkels ermöglicht.

Erfindungsgemäß haben die Anblasrohre 6 jeweils einen durch einstellbare Ausblendmittel individuell wählbaren Auslassquerschnitt 9, was in einfacher Weise mittels einer mit Ausschnitt versehenen Abschlusskappe (insb. drehbaren Verschluss- oder Endkappe 10) und einer damit eng verbundenen, über den Ausschnitt bewegbaren (schieb- bzw. drehbaren) Abdeckscheibe (Platte 11) erreicht werden kann (siehe etwa Fig.1a), wobei natürlich auch andere Mittel zur veränderlichen Einstellung von Größe und ggf. Form des Auslassquerschnitts eines Rohrendes gewählt werden können. Durch die Veränderung des Auslassquerschnitts kann die Anströmeffektivität der von einem gemeinsamen Gebläse gespeisten Anblasrohre über die Putzstrecke hinweg den jeweiligen Bedürfnissen angepaßt werden; z.B. kann der Querschnitt am Putzstreckeneingang am größten sein, um hier in größerer Menge abzutrennende Außenblätter effektiver zu entfernen, wobei jedoch - je nach Kohlart und -zustand - eine unterschiedliche Strömungsverteilung angemessen sein kann.

Eine zusätzliche Einflussnahme auf die Anblaswirkung ergibt sich mit einer Blasstrecke, wie sie in Fig.2 schematisch angedeutet ist:

Hier wird bereits die Haupt- bzw. Verteilerleitung 5 aus einzelnen Verzweigungsstutzen (Abzweigungen 12) zusammengesetzt, die gegeneinander (bei 13) verdreht werden können, so dass die den Beginn der Anblasrohre bildenden Enden der Abzweigungen (einzeln) aus der Vertikalebene (Zeichenebene) nach vorn oder nach hinten herausgeschwenkt werden können. Die daran anschließende Rohrstrecke der Anblasrohre bis zur Auslassblende umfaßt nur schematisch angedeutete Dreh- bzw. Gelenkverbindungen 14 zwischen (geraden oder gebogenen) Rohrstücken 15, wodurch nicht nur die Strahlrichtungen am Blendenausgang sondern auch der Austrittsort innerhalb der Fläche über dem Putzbereich variiert werden kann.

Eine simple Realisierung des Konzepts ist in Fig. 3 angedeutet, bei der die Anblasrohre eine insb. Winkelstücke bzw. Krümmer 16 aufweisende Rohrstrecke aus zumindest drei Teilstücken mit Dreh- und/oder Gelenkverbindungen 14 umfassen. Das wie in Fig. 2 zusammengesetzt gezeigte Hauptrohr 5 kann natürlich auch durchgehend (ohne Unterteilung) und mit angesetzten Stutzen anderer Abzweigrichtung vorgesehen sein.

Das neue Anblaskonzept kann in jeder Kopfkohl-Putzstrecke angewandt werden, in welcher der Kohl längs einer im wesentlichen horizontalen, mehr oder minder geradlinigen Wegstrecke einer schonenden Umwälzbewegung unter relativ langsamem Fortschritt vom Eingang zum Ausgang ausgesetzt ist, wofür unterschiedliche Ausführungsarten bekannt sind (s.o.).

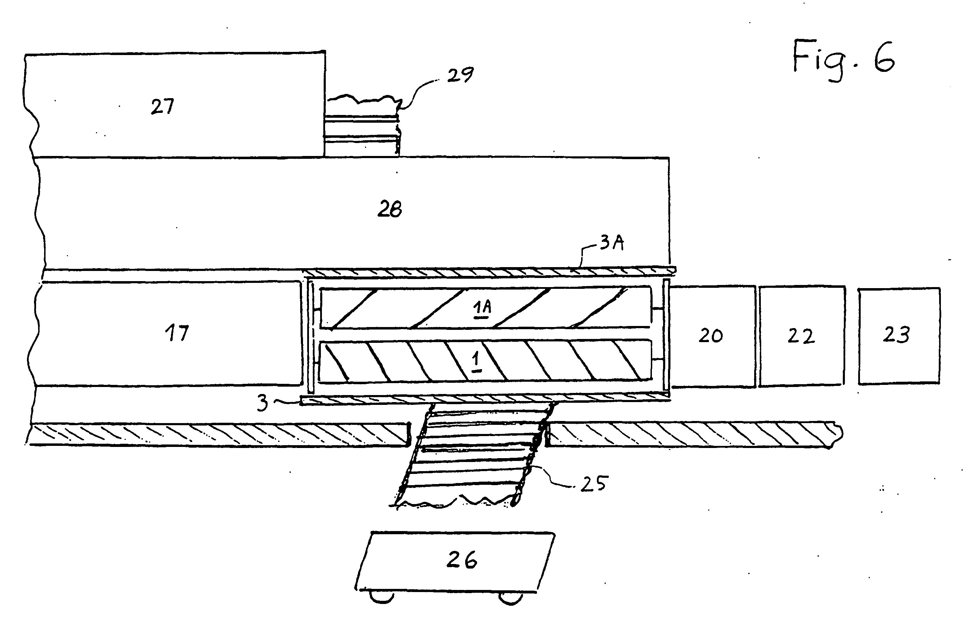

Gemäß vorliegendem Beispiel (Anlage gemäß Fig. 6) wird der am Strunkende gestutze Kohl 7 von einem Förderband 17 mit etwa trogartigem Querschnitt über eine zum Putzwalzenpaar überleitende Gummischürze 18 den Putzwalzen 1, 1A zugeliefert und dabei mittels eines im unteren Bereich streifig geschnittenen Gummivorhangs 19 abgebremst (dessen Ruhelage gestrichelt angedeutet ist).

Die Putzwalzen 1, 1A werden durch Edelstahlzylinder von 10 - 15 cm Außendurchmesser (im vorlieg. Fall 11,4 cm⌀) gebildet, die als Schneckengang eine fixierte Umwicklung (Profilstrang 2, 2A) mit relativ steifem Rundgummi oder Gummischlauch von ca. 2 bis 4 cm, insb. 3 bis 3,5 cm, Außendurchmesser aufweisen. Die in Putzrichtung rechte Walze 1 hat eine Doppelstrangwicklung 2 mit alternierend 10 und 20 cm Abstand der Windungen. Die Ganghöhe auf der Nachbarwalze 1A beträgt 30 cm. Die Umwicklung ist leicht montier- und veränderbar. Die jeweilige Rotationsgeschwindigkeit der einzelnen Walzen 1 bzw. 1A ist je nach Beschaffenheit des Kohls einstellbar.

Die mit helikalem Vorsprung versehenen bzw. umwickelten Walzen haben eine auswechselbare, stramm an den Walzenenden fixierte und eng der umwickelten Oberfläche angepaßte Stoffhülle 2B aus reibfestem Material (z.B. Segeltuch), wie in Fig.5 für die Walze 1 angedeutet ist.

Der Horizontal-Abstand der Walzen ist einstellbar, wobei berücksichtigt wird, daß der Kohl nicht zwischen den Walzen hindurchfallen darf, der Abfall aber leicht abgeht. Bei dem skizzierten Anwendungsbeispiel beträgt der Abstand zwischen den Wulststrang-Oberflächen der benachbarten Walzen in der Axialebene etwa 4 cm und zwischen den Walzenzylindern etwa 10 cm. Die Abstände sind dank entsprechender Langloch-Lagerung einstellbar. Zwischen Wulststrang-Oberfläche und Begrenzungswand sind etwa 2 cm Abstand. Die Begrenzungswände haben eine Höhe von 40 cm beginnend etwa auf dem Niveau der Walzenachsen. Ihr Abstand zu den Walzen ist ebenfalls einstellbar und kann ggf. durch einfaches Aufsetzen entsprechender Leisten in Kohlhöhe verändert werden. Eine nicht dargestellte Halte- und Tragkonstruktion ist mit der Hallenkonstruktion des Gebäudes bzw. der Putzhalle verbunden.

Der im vorliegenden Beispiel gleichsinnige Antrieb beider Walzen erfolgt über einen Keilriemen und auswechselbare Keilriemenscheiben zur Abstimmung der jeweiligen Geschwindigkeit der einzelnen Walzen. Der Antrieb insgesamt ist über Zahnradgetriebe und Zahnkette einstellbar. - Alle mit Ketten, Riemen bzw. Bändern arbeitenden Antriebselemente der Anlage sind mit Spannvorrichtungen versehen.

Im vorliegenden Beispiel werden beide Walzen gleichsinnig mit gleicher Geschwindigkeit von 0,5 bis 1,5 U/sek (insb. 1 U/sek) in Rotation versetzt. Je nach Beschaffenheit des Putzgutes kann eine höhere oder geringere Rotationsgeschwindigkeit einzelner oder beider Walzen geeigneter sein. Die Länge der Walzen beträgt etwa 2 m. Die Ganghöhe der Wicklung ist, wie oben bereits angegeben, unterschiedlich, wobei der Vortrieb des Putzgutes im wesentlichen auf die "enger gewickelte" Walze zurückgeht, während die Putzwalze mit größerer Ganghöhe des ggf. auch gleichsinnig, aber vorzugsweise gegenläufig gewickelten Profilstrangs wesentlich für die Umwälzung des Kohls verantwortlich ist.

Die Anblasstrecke mit sechs Blasrohren wird von einem Gebläse nach Art der in der Landwirtschaft üblichen Körnergebläse gespeist. Speziell verwendet wurde ein mit 7,5 KW bei 400 V arbeitendes Radialgebläse der Firma. Tornado mit 3405 U/min, das eine Volumenleistung zwischen 1500 und 1800 m³/h erbringt. Vom Haupt- bzw. Verteilerrohr 5 mit 150 mm ⌀ zweigen sechs zum Putzstreckeneingang hin gerichtete Stutzen ab (Abzweigungen von DN 150/100/45°), die jeweils auf DN 70/15° und DN 70/45° verringert und variabel einstellbar sind. Das Ende der Anblasrohre wird durch eine drehbare Abschlusskappe 10 mit Ausschnitt bzw. Öffnung und darüber (unter Bildung variabler Auslassquerschnitte 9) bewegbarem Ausblendblech (Platte 11) abgeschlossen (siehe Fig.1A).

Der geputzte Kohl gelangt am Ende der Putzstrecke über gummi-gepolsterte Abdeckungen 18' des Übergangs in ein dreiseitig mit Rahmen versehenes, feder-vorgespanntes, gummi-gepolstertes, schwenkbares Aufnahmebrett 20 und wird von Hand in Marktkisten 21 gepackt, die am Brettchenende eingehakt sind und durch leichtes Anheben seines Endes gegen die Federspannung nach Füllung mit dem geputzten Kohl gelöst werden können und über eine Schräg-Rollenbahn 22 zur Waage 23 gelangen.

Der Abfall sammelt sich - geleitet von den Gummibahnen 24 - auf einer durch die Außenwand der Putzhalle geführten Schräg-Rollenbahn 25, die zu einem Abfall-Transporter 26 führt. In diese Abfallbeseitigung wird auch Abfall einbezogen , der sich in der Halle am Rande der Anlage sammeln kann und über eine Öffnung in der (nicht dargestellten) hallenseitigen Bretter-Abschirmung der Abfall-Sammlung unter der Putzstrecke gegeben werden kann.

An allen Stellen der Beschreibung, wo "Gummi" genannt wird, ist selbstverständlich auch jedes andere Material mit vergleichbaren Eigenschaften gemeint, das dem jeweiligen Zweck genügt.

Der Kohl wird in Großkisten auf eine Schrägbühne 27 angeliefert, die zu einem Laufsteg 28 hin leicht geneigt ist, der vom Förderband 17 flankiert wird. Großkistenbühne 27 und Förderband 17 haben eine Länge von gut 12 m und reichen bis zum Beginn der Putzstrecke, während der Laufsteg 28 noch weiter bis zum Putzstreckenende reicht und über einen Aufgang 29 vom Bedienungspersonal erreicht werden kann, das den gelieferten Kohl aus der Kiste zuschneidet und auf das Förderband 17 gibt. Der Laufsteg 28 hat eine Höhe von gut 1 m, die der Höhe der flankierenden Kante der Größkistenbühne 27 gleicht. Das Förderband 17 ist ca. 2 m hoch und wird so bequem vom Personal erreicht, das den Kohl aus der Großkiste entnimmt, zuschneidet und auf das Förderband gibt.

Am Ende der Putzstrecke gelangt der Kohl in ca 1,7 m Höhe auf das geneigte Aufnahmebrettchen 20 und wird geprüft und von Hand in die auf der Rollenbahn 22 befindliche, während des Packens am Brett 20 eingehakte Kiste 21 gepackt, die nach enrsprechender Freigabe über die Schräg-Rollenbahn 22 auf die Waage 23 des 0,75 m hohen Waagetischs gelangt.

Die Anlage arbeitet mit einem Anschneider, einem Abpacker und einem Abwieger mit einer Tagesleistung (8 Std.-Tag) von ca.15 t.

## Patentansprüche

1. Vorrichtung zur Vermarktungsaufbereitung von am Strunkende auf Abgabemaß zugeschnittenem Kohl, insb. Lagerkohl, in einer Putzstrecke mit im wesentlichen horizontalen, zur Umwälzung des Kohls geeigneten Putz- und Förderwalzen, über denen eine Folge von luftbeaufschlagten Anblasrohren oder Düsen im wesentlichen zum Kohl hin zur Einstellung der Luft-Auslaßrichtung dreh- bzw. schwenkbar angeordnet sind, **gekennzeichnet durch** eine der Kohlbeschaffenheit über die Putzstrecke hinweg anpassbare Anströmeffektivität durch individuell einstellbare Auslaßquerschnitte (9) der Anblasrohre (6), die mit entsprechend veränderbaren Auslassblenden versehen sind und - **durch** ein gemeinsames Gebläse (4) gespeist - von dessen Haupt- bzw. Verteilerleitung (5) abzweigen.

2. Vorrichtung nach Anspruch 1, **dadurch gekennzeichnet, dass** der bzw. die Auslaßquerschnitt (e) des Anblasrohrs bzw. der Anblasrohre (6) am Putzstreckeneingang am größten wählbar sind.

3. Vorrichtung nach Anspruch 1 oder 2, **gekennzeichnet durch** eine allgemein symmetrisch über der Putzstrecke in Putzrichtung verlaufende Hauptleitung (5) mit abzweigenden Anblasrohren (6), deren querschnittsveränderbare Auslassenden an beliebigen Punkten über der Putzfläche und mit wählbarer Ausströmrichtung **durch** Dreh- und Umlenkmittel in der jeweiligen Rohrstrecke individuell einstellbar sind.

4. Vorrichtung nach Anspruch 3, **dadurch gekennzeichnet dass** die Anblasrohre (f) im spitzen Winkel entgegen der Putzrichtung abzweigen und zumindest einen Krümmer (16) und zumindest zwei (Dreh)Gelenkverbindungen (14) aufweisen.

5. Vorrichtung nach Anspruch 3 oder 4, **gekennzeichnet durch** Drehverbindungen (13) zwischen zur Hauptrohrstrecke zusammengesetzten Abzweigungen (12), mit denen die Anblasrohre (6) beginnen.

6. Vorrichtung nach einem der vorangehenden Ansprüche, **dadurch gekennzeichnet, dass** die Auslassblenden der Anblasrohre (6) mit individuell einstellbarem Auslassquerschnitt (9) durch eine mit Ausschnitt versehene, drehbare Verschluss- bzw. Endkappe (10) mit dreh- oder verschiebbarer Platte (11) zur Veränderung des Auslassquerschnitts (9) (freier Querschnitt) gebildet werden.

7. Vorrichtung nach einem der vorangehenden Ansprüche, **gekennzeichnet durch** ein Luft-Gebläse (4) mit einem Fördervolumen von 1500 bis 1800 m³/h für eine etwa 2 m lange Putzstrecke.

8. Vorrichtung nach einem der vorangehenden Ansprüche, **dadurch gekennzeichnet, dass** die Putzstrecke zwei im wesentlichen horizontale, parallele, mit einstellbaren Rotationsgeschwindigkeiten gleichsinnig rotierende Putz- und Förderwalzen (1, 1A) gleichen Durchmessers mit schneckenförmig gleichsinnig oder gegenläufig umlaufendem Profilstrang (2, 2A) von untereinander unterschiedlicher Windungszahl zwischen den Kohl überragenden Begrenzungswänden (3, 3A) aufweist, zwischen welche die kurz über dem Kohl endenden Anblasrohre (6) eingreifen, wobei der Abstand der mit Profilstrang (2, 2A) versehenen Putzwalzen (1, 1A) zueinander und zu den Begrenzungswänden (3, 3A) kleiner als der Kohldurchmesser einstellbar ist.

9. Vorrichtung nach Anspruch 7 oder 8, **dadurch gekennzeichnet, daß** die Begrenzungswände (3, 3A) nach unten über die Putzwalzen (1, 1A) hinausragend der Putzabfall-Überleitung auf ein Abfallförderband (25) dienen.

10. Vorrichtung nach einem der vorangehenden Ansprüche, **gekennzeichnet durch** einen - insb. auswechselbaren - eng der mit helikalem Wulstprofil (2, 2A) ausgestatteten Putzwalzenoberfläche folgenden, reibfesten Textilüberzug (2B) der einzelnen Walzen (1, 1A).

11. Halbautomatische Anlage zum Aufbereiten von Lagerkohl in Marktqualität mit einer Putzvorrichtung nach einem der vorangehenden Ansprüche, **gekennzeichnet durch**
- ein Förderband (17), das den marktgerecht am Strunkende gestutzten Kohl (7) aufnimmt und über eine das Walzenende überlappende Gummischürze (18) zur Putzstrecke fördert, wo ein nachgiebiger Vorhang (19) für eine Geschwingkeitsanpassung des schnell zulaufenden Kohls an die langsamere Putzstrecke sorgt;
- ein an den Putzstreckenausgang mit beschädigungsarmem Übergang (18') angelenktes Aufnahmebrett (20) mit Spannfeder, an dem eine Marktkiste (21) eingehakt ist und nach Füllung von Hand gegen die Federwirkung gelöst werden kann;
- woran sich eine zur Waage (23) führende Förderbahn (22), insb. Rollenbahn in Kistenbreite, anschließt.

12. Anlage nach Anspruch 11, **gekennzeichnet durch** schräge Abfall-Leitflächen (24) zwischen den Putzstreckenenden zur Übergabe des Abfalls auf eine unterhalb der Putzstrecke vorgesehene Schräg-Förderbahn (29), die zu einem Abfalltransporter (26) führt.

13. Verfahren zum Aufbereiten von Lagerkohl für die Vermarktung, **dadurch gekennzeichnet, dass** man den am Strunkende auf Abgabemaß zugeschnittenen Kohl durch eine Putzstrecke nach einem der Ansprüche 1 bis 10 schickt.

## Claims

1. Device for market preparation of cabbage cut at the stalk end to delivery size, in particular storage cabbage, in a cleaning line with substantially horizontal cleaning and conveying rollers suitable for rolling the cabbage, above which rollers, a series of blower tubes or nozzles charged with air are arranged pivotable or rotatable substantially towards the cabbage to adjust the air outlet direction, **characterised by** a flow effectiveness adjustable to the cabbage properties beyond the cleaning line by means of individually adjustable outlet cross-sections (9) of the blower pipes (6), which are provided with correspondingly adjustable outlet shutters and - fed by a common blower (4) - branch off its main or distribution conduit (5).

2. Device according to claim 1, **characterised in that** the outlet cross-section(s) of the blower pipe or pipes (6) are selectable to the greatest extent at the cleaning line input.

3. Device according to claim 1 or 2, **characterised by** a generally symmetrical main conduit (5) running above the cleaning line in the cleaning direction with branching blower pipes (6), whose cross-sectionally adjustable outlet ends are individually adjustable in the individual pipe run at any desired points over the cleaning surface and with selectable outflow direction by means of rotation means and deflection means.

4. Device according to claim 3, **characterised in that** the blower pipes (6) branch at an acute angle against the cleaning direction and have at least one elbow (16) and at least two (rotary) articulating connections (14).

5. Device according to claim 3 or 4, **characterised by** rotary connections (13) between branches (12) assembled into the main pipe run, with which the blower pipes (6) begin.

6. Device according to one of the preceding claims, **characterised in that** the outlet shutters of the blower pipes (6) are provided with an individually adjustable outlet cross-section (9) by means of a rotatable closure cap or end cap (10) provided with a cut-out and with a rotatable or displaceable plate (11) for altering the outlet cross-section (9) (clear cross-section).

7. Device according to one of the preceding claims, **characterised by** an air blower (4) with a delivery rate in the range of 1500 m³/h to 1800 m³/h for an approximately 2 m-long cleaning line.

8. Device according to one of the preceding claims, **characterised in that** the cleaning line has two substantially horizontal, parallel cleaning and conveying rollers (1, 1A) of the same diameter rotating in the same direction with adjustable rotation speeds, which rollers are provided with a helical profile section (2, 2A) running in the same or opposite direction with mutually different winding pitch and which rollers are placed between the limiting walls (3, 3A) rising above the cabbages, between which walls the blower pipes (6) ending a little above the cabbages engage, wherein the distance of the cleaning rollers (1, 1A) provided with profile section (2, 2A) from each other and from the limiting walls (3, 3A) is adjustably smaller than the cabbage diameter.

9. Device according to claim 7 or 8, **characterised in that** the limiting walls (3, 3A) extending downwardly beyond the cleaning rollers (1, 1A), serve to guide the cleaning waste to a waste conveyor belt (25).

10. Device according to one of the preceding claims, **characterised by** a - particularly interchangeable - wear-resistant textile covering (2B) of the individual rollers (1, 1A) which closely follows the cleaning roller surface that is equipped with helical bead profile (2, 2A).

11. Semiautomatic system for preparing storage cabbage in market quality, having a cleaning device according to one of the preceding claims, **characterised by**
- a conveyor belt (17) which receives cabbage (7) supported - in a manner suitable for marketing - on the stalk end and conveys it via a rubber apron (18) overlapping the roller end to the cleaning line, where a flexible curtain (19) provides for adaptation of the speed of the fast approaching cabbage to the slower cleaning line;
- a receiving board (20) articulated to the cleaning line output with a damage-preventing transition (18') having a tension spring and onto which a market crate (21) is hooked and following filling, can be released by hand against the spring action;
- to which a conveyor belt (22), and particularly a conveyor belt of crate breadth leading to the weighing device (23) is adjoined.

12. System according to claim 11, **characterised by** steep waste guide surfaces (24) between the cleaning line ends for passing the waste to a sloped conveyor belt (29) which leads to a waste transporter (26).

13. Method for processing storage cabbage for marketing, **characterised in that** the cabbage cut at the stalk end to delivery size is passed through a cleaning line according to one of the claims 1 to 10.

## Revendications

1. Dispositif de préparation à la commercialisation de chou coupé à la dimension de vente à l'extrémité du trognon, en particulier de chou de garde, dans une voie de nettoyage comportant des rouleaux nettoyeurs et transporteurs sensiblement horizontaux appropriés au roulement du chou au-dessus desquels une série de tuyaux de soufflage ou de buses alimentés en air sont montés rotatifs ou pivotants sensiblement en direction du chou pour le réglage de la direction de sortie de l'air, **caractérisé par** une efficacité d'afflux adaptable à la nature du chou le long de la voie de nettoyage par des sections de sortie réglables individuellement (9) des tuyaux de soufflage (6), qui sont pourvus de diaphragmes de sortie modifiables en conséquence et partent, alimentés par une soufflante commune (4), de la conduite principale ou de distribution (5) de celle-ci.

2. Dispositif selon la revendication 1, **caractérisé par le fait que** la ou les sections de sortie du ou des tuyaux de soufflage (6) peuvent être choisies les plus grandes à l'entrée de la voie de nettoyage.

3. Dispositif selon l'une des revendications 1 et 2, **caractérisé par** une conduite principale (5) s'étendant de manière générale symétriquement au-dessus de la voie de nettoyage dans la direction de nettoyage d'où partent des tuyaux de soufflage (6) dont les extrémités de sortie, de section modifiable, sont réglables individuellement à des points quelconques au-dessus de la surface de nettoyage et avec direction de sortie pouvant être choisie par des moyens de rotation et de changement de direction dans la voie de tuyaux respective.

4. Dispositif selon la revendication 3, **caractérisé par le fait que** les tuyaux de soufflage (6) partent sous un angle aigu par rapport à la direction de nettoyage et présentent au moins un coude (16) et au moins deux raccords d'articulation (rotatifs) (14).

5. Dispositif selon l'une des revendications 3 et 4, **caractérisé par** des raccords rotatifs (13) entre des branchements (12) assemblés en la ligne de tuyaux principale, par lesquels commencent les tuyaux de soufflage (6).

6. Dispositif selon l'une des revendications précédentes, **caractérisé par le fait que** les diaphragmes de sortie des tuyaux de soufflage (6) à section de sortie réglable individuellement (9) sont formés par un chapeau de fermeture ou d'extrémité rotatif (10) pourvu d'une échancrure avec plaque tournante ou translatable (11) pour la modification de la section de sortie (9) (section de libre passage).

7. Dispositif selon l'une des revendications précédentes, **caractérisé par** une soufflante à air (4) ayant un débit de 1500 à 1800 m³/h pour une voie de nettoyage d'environ 2 m de long.

8. Dispositif selon l'une des revendications précédentes, **caractérisé par le fait que** la voie de nettoyage présente deux rouleaux nettoyeurs et transporteurs (1, 1A) de même diamètre sensiblement horizontaux parallèles tournant dans le même sens à des vitesses réglables qui sont pourvus d'un cordon profilé (2, 2A) tournant à la manière d'un filet de vis dans le même sens ou en sens contraire et ayant un nombre de spires différent et sont placés entre des parois limites (3, 3A) dépassant le chou entre lesquelles s'engagent les tuyaux de soufflage (6) se terminant peu au-dessus du chou, la distance entre les rouleaux nettoyeurs (1, 1A) pourvus d'un cordon profilé (2, 2A) et de ceux-ci aux parois limites (3, 3A) étant inférieure au diamètre des choux.

9. Dispositif selon l'une des revendications 7 et 8, **caractérisé par le fait que** les parois limites (3, 3A), en dépassant les rouleaux nettoyeurs (1, 1A) vers le bas, servent à la transmission des déchets de nettoyage à une bande transporteuse de déchets (25).

10. Dispositif selon l'une des revendications précédentes, **caractérisé par** un revêtement textile résistant au frottement et en particulier remplaçable (2B) des différents rouleaux (1, 1A) qui suit étroitement la surface de ceux-ci pourvue d'un bourrelet hélicoïdal (2, 2A).

11. Installation semi-automatique de préparation de chou de garde de qualité marchande comportant un dispositif de nettoyage selon l'une des revendications précédentes, **caractérisée par**
- une bande transporteuse (17) qui reçoit le chou (7) supporté conformément aux conditions du marché à l'extrémité du trognon et le conduit, sur un tablier en caoutchouc (18) recouvrant l'extrémité des rouleaux, à la voie de nettoyage, où un rideau souple (19) assure une adaptation de vitesse du chou arrivant rapidement à la voie de nettoyage plus lente,
- une planche réceptrice (20) articulée à la sortie de la voie de nettoyage avec passage peu endommageant (18') et comportant un ressort de serrage, à laquelle est accrochée une caisse (21) et d'où celle-ci peut être détachée contre l'action du ressort après remplissage à la main,
- après la planche réceptrice (20), un chemin de transport (22) allant à la bascule (23), en particulier un transporteur à rouleaux de la largeur des caisses.

12. Installation selon la revendication 11, **caractérisée par** des surfaces inclinées directrices de déchets (24) entre les extrémités de la voie de nettoyage pour le transfert des déchets à un chemin de transport incliné (25) prévu au-dessous de la voie de nettoyage et menant à un transporteur de déchets (26).

13. Procédé de préparation de chou de garde pour sa commercialisation, **caractérisé par le fait qu'**on envoie le chou coupé à la dimension de vente à l'extrémité du trognon dans une voie de nettoyage selon l'une des revendications 1 à 10.
